# EUROPEAN PATENT APPLICATION

(11) **EP 0 752 785 A2**
(43) Date of publication of application: **08.01.1997**
(21) Application number: 96304831.9
(22) Date of filing: 01.07.1996
(51) Int. Cl.: H04N 5/74

(54) **Video display device**

(30) Priority: 03.07.1995 JP 167228/95; 20.10.1995 JP 272670/95; 20.10.1995 JP 272672/95
(71) Applicant: MATSUSHITA ELECTRIC INDUSTRIAL CO., LTD., Kadoma-shi, Osaka 571 (JP)
(72) Inventor: Muto, Yasuaki, Toyonaka-shi, Osaka 561 (JP); Miyai, Hiroshi, Takarazuka-shi, Hyogo 665 (JP); Takimoto, Akio, Neyagawa-shi, Osaka 572 (JP); Kuratomi, Yasunori, Suita-shi, Osaka 565 (JP); Kawakami, Toshikazu, Mishima-gun, Osaka 618 (JP); Noguchi, Hiroshi, Ibaraki-shi, Osaka 567 (JP)
(74) Representative: Crawford, Andrew Birkby

(57) **Abstract**

In a projection type video display device according to the present invention comprising light writing type spacial light modulator, disturbances brought about by resetting pulse and appeared in projected picture as black belt or beat are prevented by causing the resetting pulse, which is to withdraw electric charges produced by incomming writing light and accumulated in spacial light modulator, to occur within a vertical blanking period synchronized with vertical synchronous signal.

Further, by changing the pulse width and the voltage of resetting pulse in accordance with vertical synchronous frequency, pictures of a certain fixed brightness are made available against various vertical synchronous frequencies; and even with a high vertical synchronous frequency, projected pictures are never annoyed by such disturbance that is caused by a resetting pulse dislocated out of the vertical blanking period.

Further, by controlling the adjustments of writing voltage to be applied to spacial light modulator during writing period and resetting voltage to be applied to spacial light modulator during resetting period, the spread in characteristics of spacial light modulator is compensated to provide a certain fixed contrast and γ characteristic. Furthermore, in a video display device for full-color display, as writing voltage and resetting voltage can be established independently corresponding to respective three RGB primary colors video outputs of any desired color temperature are obtainable by adjusting the balance of light emission among the three RGB colors.

## Description

### BACKGROUND OF THE INVENTION

The present invention relates to a video display device comprising a spacial light modulator.

Video display devices comprising spacial light modulator have been attracting keen attention because of the high brightness of projected picture as compared with that projected by transmission type liquid crystal projector. The spacial light modulator is a key device of the video projection system for outputting a readout light, modulated in strength by a writing light, through reflection by an internal reflection layer.

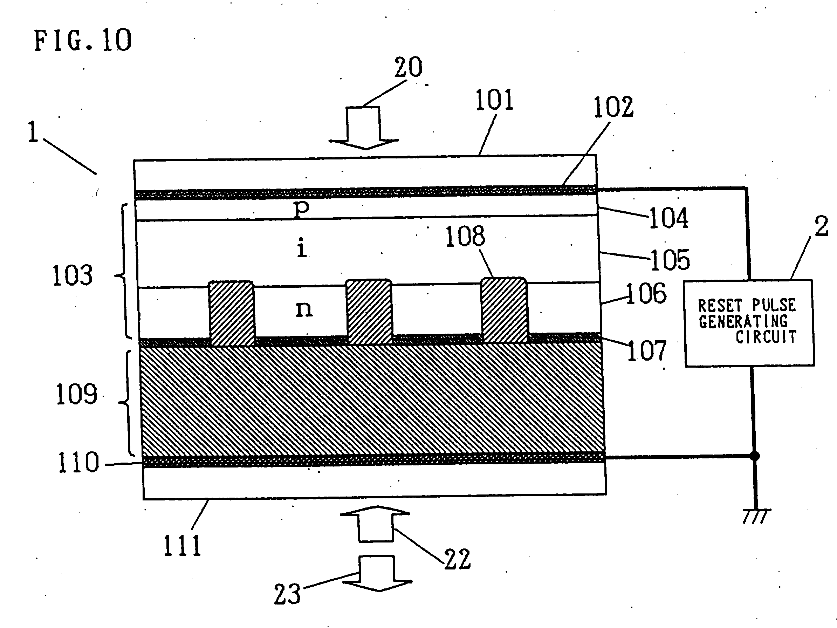

In the following, description is made on the structure and the operation of a prior art spacial light modulator. FIG.10 shows inside structure of a spacial light modulator 1. In FIG.10, numeral 101 denotes a glass substrate in writing side; 102 an electrode of transparent electro-conductive layer, such as indium tin oxide(ITO) electrode, in writing side; 103 a photodiode having pin construction comprised of amorphous silicon(hereinafter referred to as a-Si photodiode), made up of three semiconductor layers, in the order from the side of writing light, a p-type layer 104, an insulation layer(i-layer) 105, and an n-type layer 106; 107 an aluminum readout light reflection layer; 108 an insulation layer of carbon in lattice form which splits the aluminum readout light reflection layer into small pieces in a longitudinal and lateral arrangement, breaking the conduction between the small pieces of light reflection layer located next to each other. Numeral 109 denotes a liquid crystal layer of ferroelectric material for controlling the tone of picture, 110 an ITO electrode in the readout light side, 111 a glass substrate in the readout light side, 20 a writing light, 22 an incomming readout light, 23 a reflected readout light, 2 a reset pulse generating circuit for generating reset pulse to be applied between the two ITO electrodes, 102 and 110, in order to drive the spacial light modulator.

Then, the operation of a video display device comprising spacial light modulator is described. When there is no voltage applied to liquid crystal layer 109, reflected readout light 23 reflected by aluminum readout light reflection layer 107 is outputted maintaining the same state of polarization as inputted from glass substrate 111. When a voltage is applied to liquid crystal layer 109 and the voltage is gradually increased, the polarization state of reflected readout light 23 reflected by readout light reflection layer 107 gradually changes, and when the applied voltage exceeds a certain value the reflected readout light 23 is outputted with a completely transited polarity.

The operation of spacial light modulator 1 having internal structure as shown in FIG.10 is divided into two periods; a writing period for accumulating electrical charges in accordance with the strength of writing light 20, and a resetting period for removing the electrical charges accumulated.

In a case where ITO electrode 110 in the side of incomming readout light 22 is grounded as shown in FIG.10, a negative voltage is applied to ITO electrode 102 in the side of writing light. Namely, a-Si photodiode 103 is reverse biased. During a writing period, when there is no writing light 20 almost all of the voltages applied to two ITO electrodes, 102 and 110, are applied on a-Si photodiode 103, with almost no voltage on liquid crystal layer 109. Under such state, readout light 22 incomming to spacial light modulator 1 is reflected as it is, without shift in the state of polarization, and outputted as reflected readout light 23. When there is writing light 20, electrons are excited by writing light 20 at the border between p-type layer 104 and insulation layer 105 of a-Si photodiode 103. These electrons are pulled by positive potential and move towards liquid crystal layer 109. As the result, in the vicinity of respective surfaces of liquid crystal layer 109 electric charges of reverse polarity are accumulated, making liquid crystal layer 109 applied with a voltage. Along with an incrasing intensity of writing light 20, the voltage on liquid crystal layer 109 increses. The state of polarization of readout light is varied by the voltage on liquid crystal layer 109, and the state of polarization of reflected readout light 23 is shifted accordingly and is outputted.

During the resetting period, a voltage which is a plus to ITO electrode 110 is applied to ITO electrode 102 in the writing side. Namely, a-Si photodiode 103 is forward biased and the electric charges accumulated during writing period are withdrawn all at once. In this way, when liquid crystal layer 109 is applied with a voltage opposite to that of writing period, the electric charges accumulated in reflection layer 107 are removed, resulting in no voltage state on liquid crystal layer 109. As the result, during the resetting period a situation is restored wherein a readout light is outputted as reflected readout light 23 maintaining the same state of polarization as it was inputted.

Each of the small pieces of aluminum light reflection layer 107 splitted by lattice form insulation layer 108 makes an individual pixel; where, lattice form carbon insulation layer 108 electrically insulates so as electric charges stored in one of the small pieces of aluminum reflection layer 107 during writing period do not move to a neighbouring small piece.

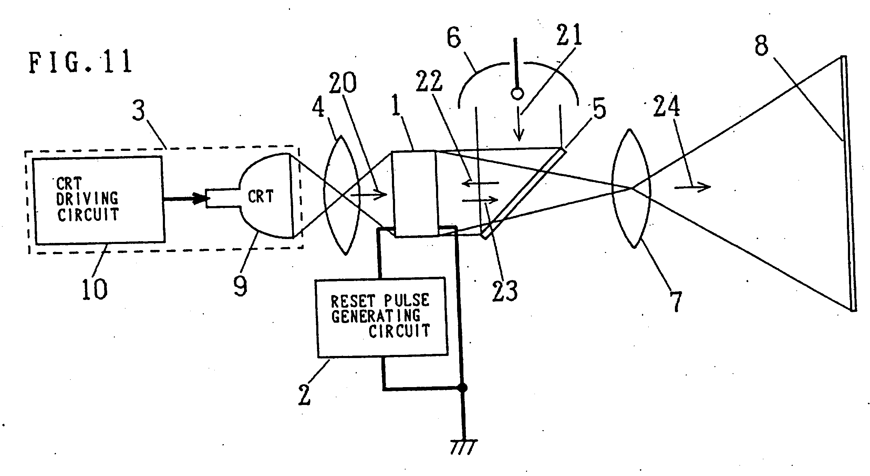

FIG.11 illustrates constitution of a conventional video display device comprising the above described spacial light modulator 1. Numeral 1 denotes a spacial light modulator, 2 a reset pulse generating circuit for supplying reset pulse to spacial light modulator 1, 3 a writing video light generating apparatus in which a CRT is normally used and comprised of a CRT 9 and a CRT driving circuit 10. Numeral 4 denotes a writing lens for having an image outputted from CRT 9 focused on the writing light incomming surface of spacial light modulator 1; 5 a beam splitter for reflecting or transmitting the light depending on the difference in the state of polarization, which reflects the S wave and transmits the P wave; 6 a light source of incomming readout light 22, which is normally a xenon lamp or a metal halide lamp; and 7 a projection lens for having reflected readout light 23 focused on a screen 8 as picture.

Now in the following, the operation is described with a video display device constituted as shown in FIG.11. A video signal generated in video signal generating apparatus 3 is outputted from CRT 9 as a writing light 20 to be irradiated on the writing side of spacial light modulator 1 through writing lens 4. Writing light 20 irradiated on spacial light modulator 1 makes each of the pixels accumulate electric charges corresponding to the intensity distribution of the light irradiated on the incomming surface.

A light of random polarity 21 is generated from light source 6. As beam splitter 5 reflects the S wave and transmits the P wave, only the S wave reflected by beam splitter 5 is supplied to spacial light modulator 1 as incomming readout light 22. Incomming readout light 22 supplied to spacial light modulator 1 is reflected within spacial light modulator 1 to become reflected readout light 23, during which procedure the state of polarization of reflected readout light 23 is varied by the electric charges stored in spacial light modulator 1. When a strong writing light 20 is supplied on spacial light modulator 1, a strong voltage is applied to liquid crystal layer 109 to make the writing side a ninus with respect to the readout side, and reflected readout light 23 changes its state from the S wave to P wave. As beam splitter 5 allows only the P wave to pass through, the element of P wave alone contained in reflected readout light 23 goes through beam splitter 5 to be focused on screen 8 by projection lens 7.

The state of polarization of reflected readout light 23 varies depending on the quantity of electric charges accumulated in spacial light modulator 1; when the intensity of writing light 20 is high an image projected on screen 8 is bright, while it is dark when the intensity is low. As an image information supplied on spacial light modulator 1 produces writing light 20 which is different in each of the respective pixels, the respective pixels have different electric charges; therefore the state of polarization of reflected readout light 23 varies in each of the respective pixels and an image is projected on screen 8 in accordance with the image information supplied.

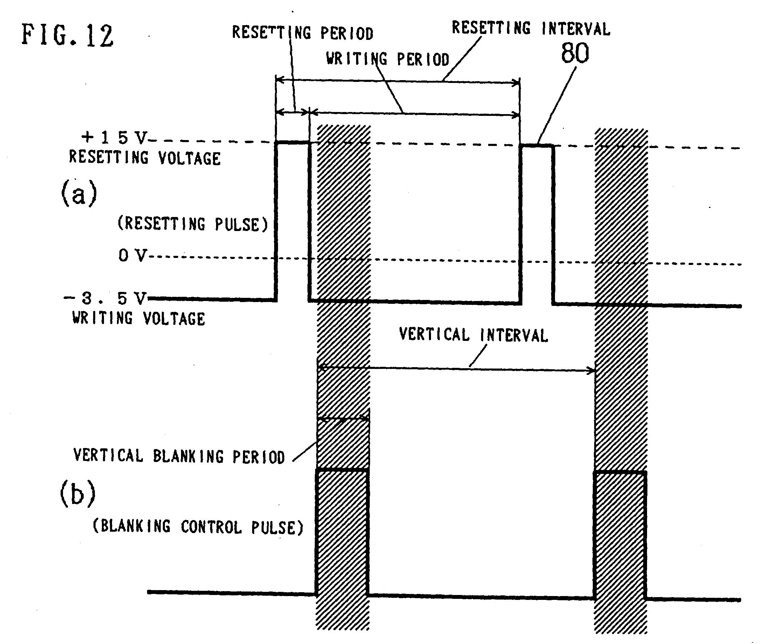

Next, description is made on the resetting pulse. In FIG.12(a), a typical resetting pulse 80 is shown. The voltages in FIG.12(a) are indicated based on ITO electrode 110 in the side of readout light. The voltage applied between ITO electrode 102 in the side of writing light and ITO electrode 110 in the side of readout is -3.5V during writing period and +15V during resetting period, takes a complete rectangular wave form; and during the resetting period it is set at 300µs, irrelevant to the vertical synchronous frequency. The form of resetting pulse has three parameters; they are, the width of resetting pulse, the resetting voltage (a voltage to be applied during resetting period between two ITO electrodes, 102 and 110, of spacial light modulator 1) and the writing voltage (a voltage to be applied during writing period between two ITO electrodes, 102 and 110, of spacial light modulator 1). When the resetting pulse width increases, a picture projected on screen gets darker, and the higher resetting voltage results in the lower brightness of the picture. Meanwhile, the higher the absolute value of writing voltage the brighter is the picture.

Video display devices comprising the above described spacial light modulator 1 are attracting an interest because of a significantly brighter picture over that by transmission type liquid crystal projectors. The conventional video display devices comprising spacial light modulator, however, have several problems as described in the following.

In a conventional video display device comprising spacial image modulator, the resetting period does not coincide with the vertical blanking period, accordingly the resetting pulse shown in FIG.12(a) does not basically overlap with the vertical blanking period, as shown in FIG.12(b). Resettings are repeated while picture is being projected; therefore, in a case where the resetting cycle is relatively closer to the vertical blanking cycle the projected picture has a disturbance by a black belt, where the resetting cycle is shorter than the vertical blanking cycle the picture suffers from a beat disturbance. Further, because projected picture gets dark during resetting period, it was impossible to maximize the time aperture ratio, which resulted in a reduced brightness of projected picture. This is a first problem.

The above described time aperture ratio is defined by the integration of the light intensity values; where a state in which the highest intensity light is constantly maintained equals to 100% time aperture ratio. In observing a practical video signal in terms of the brightness from a point in an observation space, even if the brightness significantly varied within a small fraction of time, the brightness visually perceivable is an integration of the brightness values during the fraction of time, because the speed of compliance by the human eyes is about 1/60sec. In conclusion, the time aperture ratio is a unit to represent relative brightness; and higher the value the brighter is the picture.

When various images having different vertical synchronous frequencies are to be projected, a balanced timing between resetting and writing is ruined by the vertical synchronous frequency, because the resetting period is fixed. When the resetting period goes long, picture projected on screen gets dark. A second problem stems from the vertical synchronous frequency: because the brightness of picture on screen is determined by the relative time ratio between the resetting period and the writing period, if the vertical synchronous frequency is high the time ratio of the resetting period goes relatively high, resulting in a reduced time aperture ratio, consequently a darker picture.

Further, among various systems comprising spacial light modulator, it has been a normal situation that there are system to system spreads in the light output. This is mainly caused first by spread in the voltage to be applied to liquid crystal layer 109 of spacial light modulator 1. This is because that there is a spread in the quantity of electron to be produced by the writing light in a-Si photodiode layer 103 of spacial light modulator, and that the resistance value itself of each of the constituent parts of spacial light modulator 1 has a spread. A second factor of the spread in the light output lies in a fact that even if a same voltage is applied to liquid crystal layer 109 of spacial light modulator 1, different light outputs are produced from each respective spacial light modulator 1 because the aligning directions of liquid crystals subtly differ among respective spacial light modulators 1.

In order to absorb the spreads in light output among respective spacial light modulators 1, conventional video display devices comprised an adjusting means within writing video light generating apparatus 3 for adjusting intensity of the light for writing a video information on spacial light modulator 1. In a case where writing video light generating apparatus 3 is comprised of CRT 9 and CRT driving circuit 10, the voltage to be applied to cathode electrode or grid electrode of CRT 9 was adjusted in CRT driving circuit 10. Especially, when displaying a color image using three pieces of spacial light modulator 1 said adjustment of light output was essential to solve the spreads in light output of the R, G and B colors; otherwise color temperature of the white is affected.

In conventional video display devices comprising spacial light modulator, however, the above described method of compensating the spreads in light output of spacial light modulator 1 through CRT driving circuit 10 created another cause of inconvenience. Because of spreads in the characteristics of spacial light modulator 1 and peripheral constituent members, the aligning axis of liquid crystal is sometimes displaced, or insufficient voltage is applied to liquid crystal layer 109, which results in a situation where liquid crystal is not completely aligned for the display of an intended total black, allowing some of the lights to reach screen. In such an occasion where there is a displacement in the revolution angle of liquid crystal itself, it may not be possible to completely compensate through the adjustment in the intensity of writing light alone. By the same reason, where there is a shift in the γ curve of liquid crystal itself, it may not be possible to completely compensate through the adjustment in the intensity of writing light alone. If unable to display the total black and the total white, the contrast of projected picture is affected and the quality of picture deteriorates. These inconveniences that have arisen as a result of adjustment of the light intensity for compensating the spread in light output are of the nature which is not solvable through the adjustment of the intensity of light for writing on spacial light modulator 1.

As described above, conventional video display devices comprising spacial light modulator harbour a third problem that stems from the speread in characteristics of spacial light modulator itself.

### SUMMARY OF THE INVENTION

Various problems as described above are solved according to the present invention. The disturbances like a dark belt and beat hazard in the picture occurred as a result of application of the resetting pulse to the degradation of picture quality are removed; the decreased brightness that stems from the vertical synchronous frequency is solved, and the decreased contrast due to inability of displaying the complete black or the complete white is improved. Thus the present invention intends to prevent deterioration of the quality of picture displayed.

A video display device according to a first embodiment of the present invention comprises
a light writing type spacial light modulator,
a writing video light generating apparatus for generating a light scanning horizontally and vertically for writing in said spacial light modulator, and
a vertical synchronous reset pulse generating circuit for generating reset pulse synchronized with vertical synchronous signal of said writing video light generating apparatus for withdrawing electric charges produced by the incomming of said writing light and accumulated in said spacial light modulator, to be applied between first and second electrodes of said spacial light modulator.

The reset pulse generator of a video display device according to the first embodiment generates resetting pulse only once for each vertical blanking period.

A video display device according to a second embodiment of the present invention comprises
a light writing type spacial light modulator,
a writing video light generating apparatus for generating a light scanning horizontally and vertically for writing in said spacial light modulator,
a vertical synchronous reset pulse generating circuit for generating reset pulse synchronized with vertical synchronous signal of said writing video light generating apparatus for withdrawing electric charges produced by the incomming of said writing light and accumulated in said spacial light modulator, to be applied between first and second electrodes of said spacial light modulator,
a frequency/voltage converting circuit for converting frequency of said vertical synchronous signal to a voltage in accordance with the frequency value, and
a reset pulse controlling circuit for modulating the pulse width of said resetting pulse, the resetting voltage to be applied between two electrodes of said spacial light modulator during resetting period and the writing voltage to be applied between two electrodes of said spacial light modulator during writing period in accordance with the output of said frequency/ voltage converting circuit.

A video display device according to a third embodiment of the present invention comprises
a light writing type spacial light modulator,
a writing video light generating apparatus for generating a light scanning horizontally and vertically for writing in said spacial light modulator,
a reset pulse generating circuit for generating reset pulse for withdrawing electric charges produced by the incomming of said writing light and accumulated in said spacial light modulator, to be applied between first and second electrodes of said spacial light modulator, and
a reset pulse voltage adjusting circuit for varying the writing voltage to be applied between two electrodes of spacial light modulator during writing period and the reset voltage to be applied between two electrodes of spacial light modulator during resetting period.

The reset pulse voltage adjusting circuit of the third embodiment of the present invention comprises
a voltage generator for generating the writing voltage to be applied between two electrodes of spacial light modulator during writing period and the reset voltage to be applied between two electrodes of spacial light modulator during resetting period,
a voltage controller for controlling the voltage to be outputted from said voltage generator, and
a memory circuit for memorizing said voltage value.

According to a constitution of said first embodiment, resetting is performed within the vertical blanking period, consequently the disturbances in picture like black belt or beat hazard appeared in a prior art constitution when resetting pulse was applied to spacial light modulator do not come in sight; and the time aperture ratio can be maximized.

According to a constitution of said second embodiment, time balance between the resetting and the writing can be adjusted for the varied vertical synchronous frequency, by varying the reset pulse voltage and the reset pulse width in accordance with the vertical synchronous frequency; therefore brightness of picture is maintained constant without degrading the time aperture ratio.

According to a constitution of said third embodiment, voltage to be applied to the liquid crystal layer of spacial light modulator can be adjusted for the varying light output of spacial light modulator by adjusting the resetting voltage and the writing voltage to be applied between two electrodes of spacial light modulator, because a reset pulse controlling circuit for varying the writing voltage to be applied between two electrodes of spacial light modulator during writing period and the resetting voltage to be applied between two electrodes of spacial light modulator during resetting period is comprised in the embodiment. Consequently, the displacements in aligning axis and γ characteristics of liquid crystal of spacial light modulator, compensation of which was impossible by adjustment of the light intensity of writing light to spacial light modulator, are compensated and display of the complete black and the complete white becomes possible

The reset pulse controlling circuit of the third embodiment is a one which makes adjustment of the writing voltage to be applied to two electrodes of spacial light modulator during writing period and the resetting voltage to be applied to two electrodes of spacial light modulator during resetting period easy.

### BRIEF DESCRIPTION OF THE DRAWINGS

FIG.1 shows constitution of a video display device according to a first embodiment of the present invention.

FIG.2 is a waveform chart showing the relationship between the resetting pulse and the blanking.

FIG.3 shows a practical example of reset pulse generating circuit.

FIG.4 shows constitution of a video display device according to a second embodiment of the present invention.

FIG.5 shows a practical example of frequency/voltage converting circuit and reset pulse controlling circuit.

FIG.6 shows constituion of a video display device according to a third embodiment of the present invention.

FIG.7 shows a practical example of reset pulse voltage controlling circuit.

FIG.8 shows an equivalent circuit of spacial light modulator.

FIG.9 explains the voltage adjustment of spacial light modulator.

FIG.10 shows structure of a spacial light modulator.

FIG.ll shows constitution of a prior art video display device.

FIG.12 is a waveform chart showing the conventional relationship between the resetting pulse and the blanking.

### DESCRIPTION OF THE PREFERRED EMBODIMENTS

### (First embodiment)

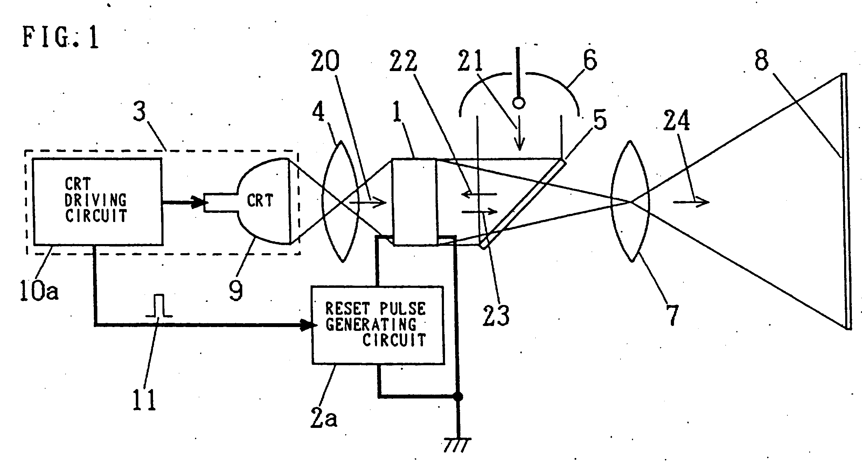

FIG.1 shows constitution of a video display device according to a first embodiment of the present invention. In FIG. 1, numeral 1 denotes a spacial light modulator, 2a a reset pulse generating circuit, 3 a writing video light generating apparatus comprised of, in this embodiment, a CRT9 and a CRT driving circuit 10a. Numeral 4 denotes a writing lens for having a video light outputted from writing video light generating apparatus 3 focused on spacial light modulator 1, 5 a beam splitter for reflecting or transmitting a light depending on the state of polarization, reflecting the S wave and transmitting the P wave. Numeral 6 denotes a light source of readout light, e.g. a xenon lamp. Numeral 7 denotes a projection lens which projects an image on a screen 8. The constitution and functioning of spacial light modulator 1 have already been described above, therefore explanation of which is omitted here.

Although operation of the basic part of video display device shown in FIG.1 remains the same as that of a prior art video display device shown in FIG.ll, description is quickly repeated here for the sake of easier comprehension. In FIG.1, a video signal generated in writing video signal generating apparatus 3 is outputted from CRT 9 as a writing light 20 to be irradiated on the incomming side of spacial light modulator 1 through writing lens 4. Writing light 20 irradiated on spacial light modulator 1 makes each of the pixels accumulate electric charges corresponding to the intensity distribution of the light irradiated on the incomming surface.

A light of random polarity 21 is generated from light source 6. As beam splitter 5 reflects the S wave and transmits the P wave, only the S wave reflected by beam splitter 5 is supplied to spacial light modulator 1 as incomming readout light 22. Incomming readout light 22 supplied to spacial light modulator 1 is reflected within spacial light modulator 1 to become reflected readout light 23, during which procedure the state of polarization of reflected readout light 23 is varied by the electric charges stored in spacial light modulator 1. When a writing light 20 is supplied on spacial light modulator 1, reflected readout light 23 changes its state from the S wave to P wave. As beam splitter 5 allows only the P wave to pass through, element of P wave alone contained in reflected readout light 23 goes through beam splitter 5 to be focused on screen 8 by projection lens 7.

The state of polarization of reflected readout light 23 varies depending on the quantity of electric charges accumulated in spacial light modulator 1; when the intensity of writing light 20 is high a picture projected on screen 8 is bright, while it is dark when the intensity is low. Image information supplied on spacial light modulator 1 differs in each of the respective pixels, and each of the pixels is provided with different electric charges of its own; therefore the state of polarization of reflected readout light 23 varies depending on respective pixels and a picture is projected on screen 8 in accordance with the image information supplied.

The electric charges accumulated during writing period within spacial light modulator 1 by writing light 20 are withdrawn by applying resetting pulse between two ITO electrodes of spacial light modulator 1. In this embodiment, a synchronous signal 11 outputted from CRT driving circuit 10a of writing video light generating apparatus 3 is inputted to reset pulse generating circuit 2a. As a result, the resetting pulse is synchronized with the vertical synchronous signal 11, and applied between the two ITO electrodes of the spacial light modulator 1. As the resetting pulse is arranged to occur only once during the vertical blanking period of writing video light generating apparatus 3, the black belt which appeared in a conventional picture due to resetting pulse comes up during the vertical blanking period in this embodiment; so it does not appear in a picture.

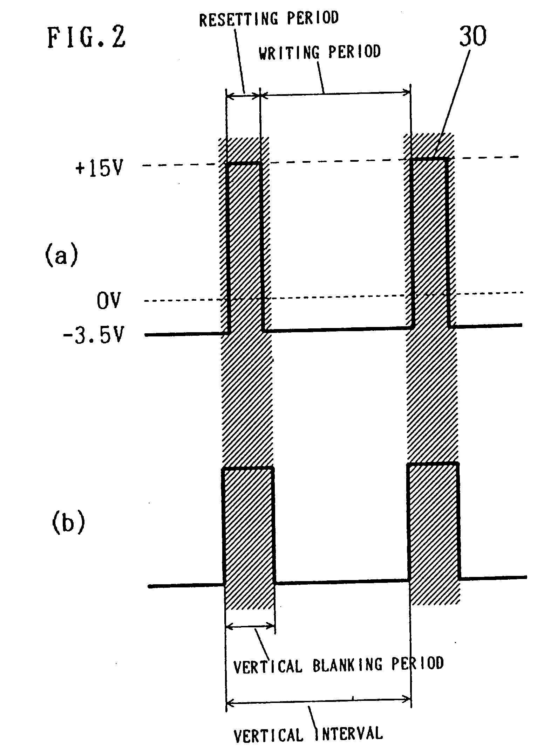

FIG.2(a) shows a typical voltage waveform of reset pulse 30 according to this embodiment. The voltage of reset pulse 30 in FIG.2(a) is indicated with readout side ITO electrode 110 of spacial light modulator 1 shown in FIG.10 as the base potential. The voltage is -3.5V during writing period, +15V during resetting period, representing a square waveform. Duration of the resetting period is 300usec., and the reset pulse occurs within the vertical blanking period as described earlier. FIG.2(b) shows the timing of control on vertical blanking, indicating that the resetting period in FIG.2(a) is included within the vertical blanking period of FIG.2(b).

According to the first embodiment of the present invention, the black belt, which conventionally appeared due to the reset pluse in a picture, occurs within a vertical resetting period, therefore never appears in a picture. Further, the time aperture ratio can be set to the highest possible extent. Thus a quality picture of high brightness is made available.

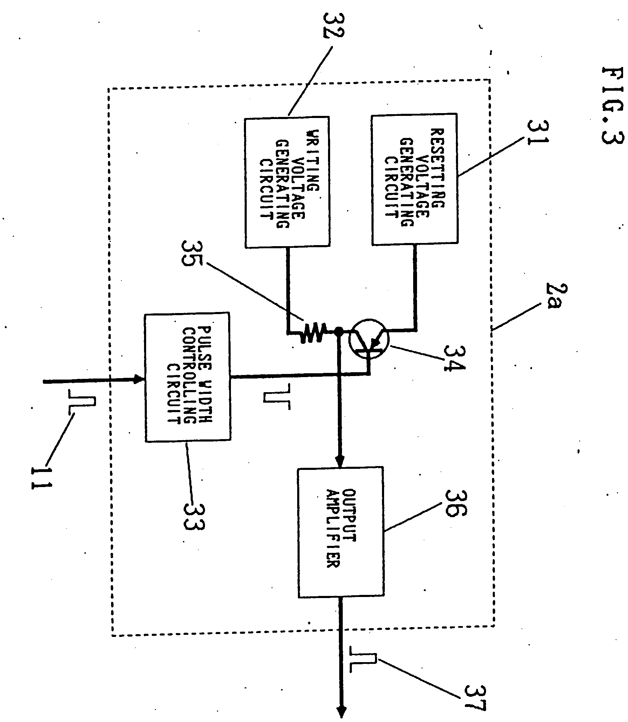

Here, a practical example of reset pulse generating circuit 2a is shown in FIG.3. A resetting voltage generating circuit 31 generates a resetting voltage to be applied between two electrodes of spacial light modulator 1 during the resetting period. A writing voltage generating circuit 32 generates a writing voltage to be applied between two electrodes of spacial light modulator 1 during the writing period. In the resetting voltage generating circuit 31 and writing voltage generating circuit 32 of the present embodiment, any desired voltages are produced through a simple voltage dividing circuit comprised of resistors. A pulse width controlling circuit 33 detects the rising of vertical synchronous signal 11, and converts it into a negative polarity pulse having specific pulse width. Pulse width controlling circuit 33 of the present embodiment comprises a general-use mono-stable multi vibrator IC. Numeral 34 denotes an emitter-grounded transistor for reversal, 35 a collector resistor of transistor 34, and a pulse of negative polarity outputted from pulse width controlling circuit 33 is applied to the base of transistor 34. As the result, a positive polarity pulse is generated in the collector of transistor 34 with the resetting voltage at HIGH side and writing voltage at LOW side. The positive polarity pulse is inputted to an output amplifier 36, current of which is amplified to be applied between two electrodes of spacial light modulator 1 as reset pulse 37. As reset pulse generating circuit 2a is triggered by vertical synchronous signal 11, a resetting pulse having a desired pulse width is obtainable in synchronization with vertical synchronous signal 11.

The foregoing descriptions have been made assuming a single color light. For displaying a picture in color using the present system, three sets of spacial light modulator 1, writing video light generating apparatus 3, writing lens 4, beam splitter 5 and projection lens 7 are necessary, each corresponding to the three primary colors, R, G and B, respectively, plus a dichroic mirror for splitting a light from light source 6 into the three primary colors, R, G and B. The functions as revealed in the present embodiment of course work out to produce the same effects also in a color display system.

### (Second embodiment)

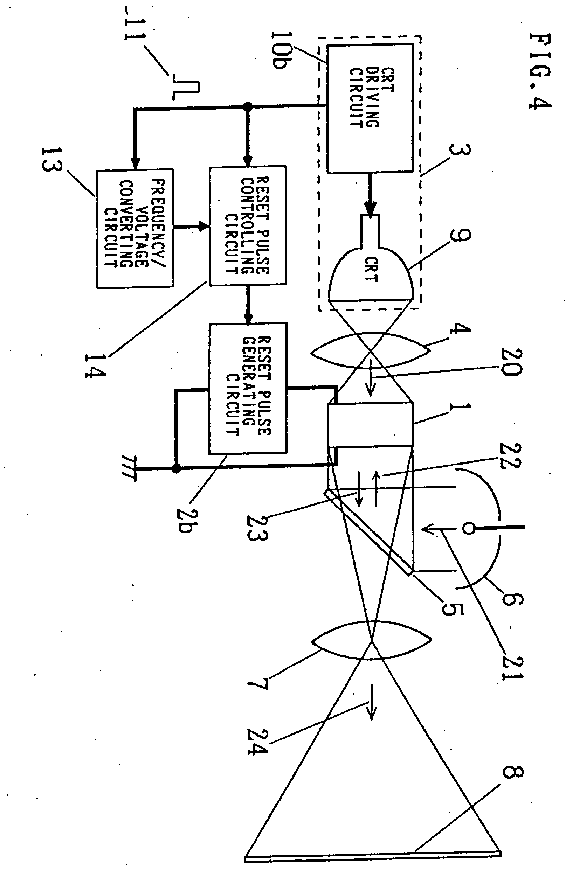

FIG.4 shows structure of a video display device according to a second embodiment of the present invention. In FIG.4, numeral 1 denotes a spacial light modulator, 2b a reset pulse generating circuit for driving spacial light modulator 1, 3 a writing video light generating apparatus which is comprised of a CRT 9 and a CRT driving circuit 10b in this embodiment. Numeral 4 denotes a writing lens for having an image outputted from writing video light generating apparatus 3 focused on spacial light modulator 1; 5 a beam splitter for reflecting or transmitting a light depending on the state of polarization, reflects the S wave and transmits the P wave. Numeral 6 denotes a light source of readout light, e.g. a xenon lamp is used. A projection lens 7 projects a focused image on a screen 8. In the present second embodiment, the above described constituent sections operate in the same manner as those of the first embodiment, and the structure and function of spacial light modulator 1 have already been described, therefore these are not repeated here.

In the following, description is made only on the points which differ from the first embodiment. In FIG.4, numeral 13 denotes a frequency/voltage converting circuit(hereinafter, FV converting circuit), 14 a reset pulse controlling circuit for controlling the form of reset pulse with vertical synchronous signal as trigger. Reset pulse controlling circuit 14 in the present embodiment works with a fixed ratio between resetting period and writing period, regardless of frequency value of the vertical synchronous signal.

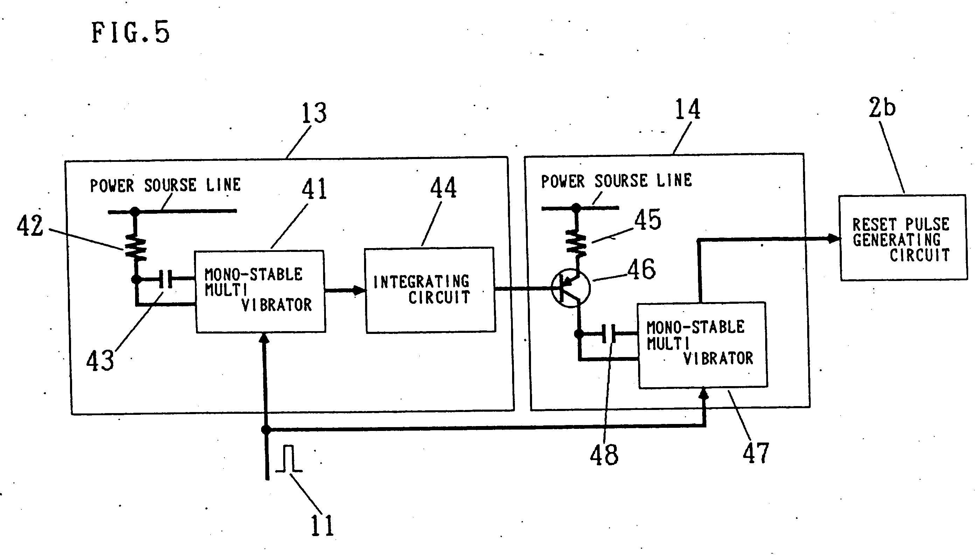

FIG.5 shows a practical example each of FV converting circuit 13 and reset pulse controlling circuit 14. When vertical synchronous signal 11 is inputted, FV converting circuit 13 generates a voltage corresponding to the frequency of vertical synchronous signal 11. In a circuit of the present embodiment, the output voltage from FV converting circuit 13 goes smaller along with the increasing frequency. Practically, in FV converting circuit 13 vertical synchronous signal 11 is inputted to mono-stable multi vibrator 41. Mono-stable multi vibrator 41 generates a negative polarity pulse of a certain width determined by the values of resistor 42 and capacitor 43. The negative polarity pulse is then supplied to an integrating circuit 44 to be integrated there and converted into a direct current voltage. As the input to integrating circuit 44 is pulse of negative polarity, the output of FV converting circuit 13 goes smaller along the increasing frequency of vertical synchronous signal 11.

In reset pulse controlling circuit 14, pulse is generated by nomo-stable multi vibrator 47. The output voltage of FV converting circuit 13 is supplied to base of a transistor 46, and flows an electric current to an emitter resistor 45. As described earlier, when the frequency of vertical synchronous signal 11 is high, the output voltage of FV converting circuit 13 becomes small, the electric current flowing through resistor 45 increases, and a capacitor 48 is charged within a short period of time. As the result, the pulse width of output pulse from mono-stable multi vibrator 47 becomes small. On the contrally, when the frequency of vertical synchronous signal 11 goes low, the pulse width of output pulse from mono-stable multi vibrator 47 goes large. Therefore, by setting the constant of emitter resistor 45 and capacitor 48 at an appropriate value, the time ratio of output pulse of mono-stable multi vibrator 47 to the vertical interval may be fixed. As the output pulse of mono-stable multi vibrator 47 is triggered by vertical synchronous pulse 11, an output pulse having a fixed pulse width time ratio, and synchronized with the vertical synchronous frequency, is supplied to reset pulse generating circuit 2b.

As described above, by controlling the reset pulse width in accordance with vertical synchronous frequency, it becomes possible to solve the problems stemming from the vertical synchronous frequency; that the time balance of resetting and writing is broken by the vertical synchronous frequency, and as the vertical synchronous frequency goes high the time aperture ratio goes low rendering a dark picture.

In the second embodiment described above, the reset pulse width has been controlled in accordance with the vertical synchronous frequency. When the reset pulse width is made wide, a picture projected on screen 8 gets dark. Besides the width of reset pulse, parameter for the shape of resetting pulse includes the reset voltage to be applied between two electrodes of spacial light modulator 1 during resetting period and the writing voltage to be applied between two electrodes of spacial light modulator 1 during writing period. There exists a relationship that higher the reset voltage the image output gets darker; higher the absolute value of writing voltage the image output goes brighter. Consequently, shifting of any of said three parameters results in a same effect in controlling the brightness of a picture.

For example, when the vertical synchronous frequency goes high the balance between the resetting and the writing is broken and image output goes dark, however this can be compensated by lowering the resetting voltage. However, in a case where the reset pulse width is kept fixed, if the vertical frequency goes high the resetting pulse can not be provided within the vertical blanking period, resulting in an overlapping of the resetting pulse and the image signal which part is projected dark on a screen. In order to avoid occurrence of such deterioration of picture quality, reset pulse controlling circuit 14 in the second embodiment of the present invention controls the width of reset pulse in accordance with the vertical synchronous frequency.

In the reset pulse controlling circuit, it is easy to modulate the reset voltage to be applied between two electrodes of spacial light modulator 1 during resetting period and the writing voltage to be applied between two electrodes of spacial light modulator 1 during writing period by the output of FV converting circuit 13. Practically, when vertical synchronous frequency goes high, the output voltage from FV converting circuit 13 goes low; therefore by modulating the reset voltage with the output voltage from FV converting circuit 13 using an operational amplifier or other means the reset voltage may be lowered when the vertical synchronous frequency goes high, and a picture projected on screen can be maintained as brighter as compared with that without modulating of the reset voltage. Or, a phenomenon that a projected picture turns dark when the vertical frequency goes high can be compensated. Similarly, by modulating the writing voltage with the output voltage from FV converting circuit 13 the writing voltage may be lowered(the absolute value becomes large) when the vertical synchronous frequency goes high, and the brightness of projected picture can be maintained on a constant level.

As described above, by modulating the reset voltage and the writing voltage, not only the reset pulse width, with the vertical synchronous frequency the brightness of video output can be maintained constant against varied vertical synchronous frequency when projecting various pictures of different vertical synchronous frequency, and the reset pulse can be disposed within the vertical blanking period even when the vertical frequency is high; thus, the reset pulse and the video signal never supersede to each other, so the degradation of picture quality caused by an overlapping of the reset pulse and the video signal projected on screen as a black belt is prevented.

The foregoing descriptions have been made assuming a single color light. For displaying a picture in full-color using the present system, three sets of spacial light modulator 1, writing video light generating apparatus 3, writing lens 4, beam splitter 5 and projection lens 7 are necessary, each corresponding to the three primary colors, R, G and B, respectively, plus a dichroic mirror for splitting a light from a light source 6 into the three primary colors, R, G and B. The functions as revealed in the present embodiment of course work out to produce the same effects also in a full-color display system.

### (Third embodiment)

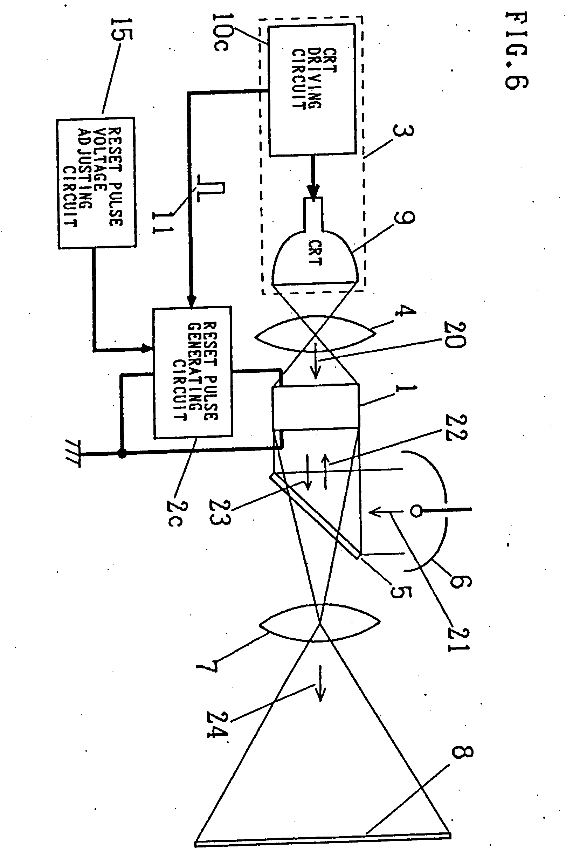

FIG.6 shows constitution of a video display device according to a third embodiment of the present invention. Many of the constituent parts in FIG.6 are in common with those in FIG.1 where the constitution of first embodiment is shown, therefore in the following only those which are different from FIG.1 are described. In FIG.6, numeral 2c denotes a reset pulse generating circuit, which generates a reset pulse with the control by the output from a reset pulse voltage adjusting circuit 15. Reset pulse voltage adjusting circuit 15 adjusts respectively the writing voltage to be applied between two electrodes of spacial light modulator 1 during writing period and the resetting voltage to be applied between two electrodes of spacial light modulator 1. The other constituent parts and their functions are the same as those described in the first embodiment shown in FIG.1, and the structure and function of spacial light modulator 1 have already been described, therefore these are not repeated here.

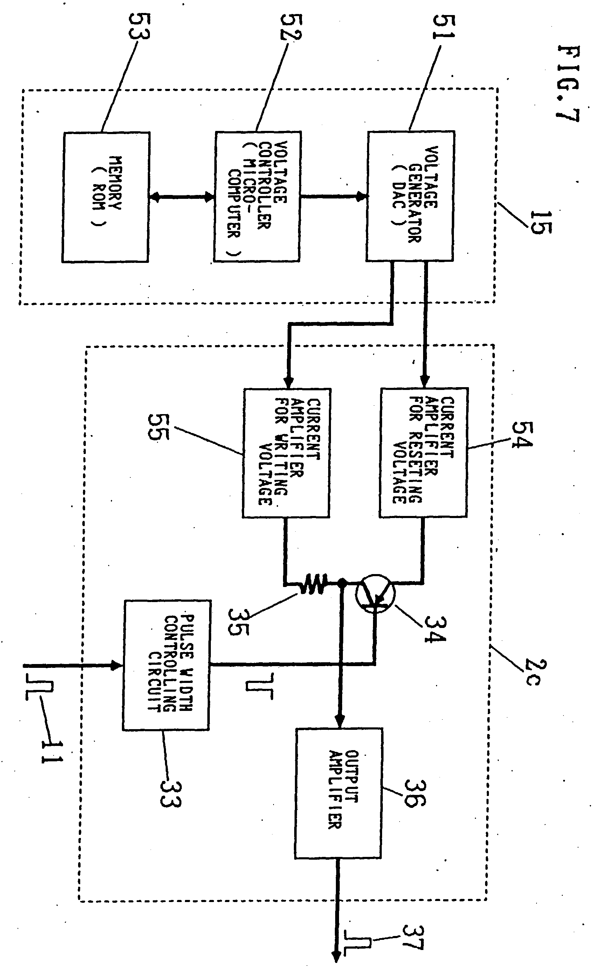

A practical example of reset pulse voltage adjusting circuit 15 is shown in FIG.7, where, numeral 51 denotes a voltage generator for supplying to reset pulse generating circuit 2c the writing voltage to be applied between two electrodes of spacial light modulator 1 during writing period and the resetting voltage to be applied between two electrodes of spacial light modulator 1 during resetting period; normally a D/A converter(DAC) is used. Numeral 52 denotes a voltage controller for controlling voltage generator 51 by providing to voltage generator 51 an information on voltage to be outputted; normally comprised of a microcomputer. A memory 53 stores values of voltages to be outputted by voltage generator 51, or the resetting voltage value and the writing voltage value; normally comprised of an EEP-ROM.
Numeral 2c denotes a reset pulse generating circuit. The basic function of reset pulse generating circuit remains the same as that described in the first embodiment; however the constitution in the present embodiment differs from that of reset pulse generating circuit 2a of the first embodiment shown in FIG.1. In reset pulse generating circuit 2c of the present embodiment, as the resetting voltage and the writing voltage are supplied from reset pulse voltage adjusting circuit 15, the resetting voltage generating circuit 31 and the writing voltage generating circuit 32 in FIG.3 are replaced respectively by the current amplifier for resetting voltage 54 and the current amplifier for writing voltage 55.

In adjusting the resetting voltage and the writing voltage using reset pulse voltage adjusting circuit 15, when an instruction to control the voltage is given from outside through e.g. a remote controller, voltage controller 52 issues an instruction to voltage generator 51 to change the voltage. Upon receiving an instruction to memorize information, or to turn power supply to the system OFF, voltage controller 52 orders memory 53 to store the information on voltage being supplied to voltage generator 51. When power supply to the system is turned ON, voltage controller 52 reads the voltage information stored in memory 53, which information is then communicated to voltage generator 52 to control voltage generator 51.

Voltage waveform of a typical reset pulse outputted from reset pulse generating circuit 2c is as shown earlier in FIG.2(a), in which the ITO electrode 110 in readout side of spacial light modulator 1 in FIG.10 is used as the base potential. The voltage during writing period is -3.5V, while +15V during resetting period; and has a rectangular waveform. The time ratio between the writing period and the resetting period is 60:1.

Now in the following, how contrast is compensated through adjustments of the reset voltage to be applied between two electrodes of spacial light modulator 1 during resetting period and the writing voltage to be applied between two electrodes of spacial light modulator 1 during writing period is described.

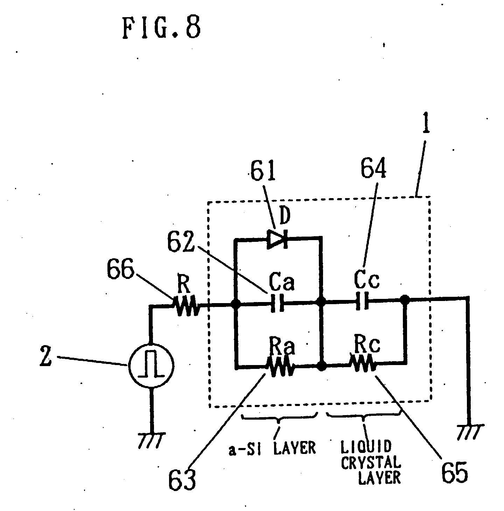

FIG.8 is an equivalent circuit of spacial light modulator 1, where numeral 61 denotes a diode component of a-Si photodiode 103, 62 an equivalent capacitance(capacitor) component of a-Si photodiode 103, 63 an equivalent resistance component of a-Si photodiode 103, 64 an equivalent capacitance(capacitor) component of liquid crystal layer 109, 65 an equivalent resistance component of liquid crystal layer 109. Operation of the equivalent circuit is as described earlier: The electrons excited by writing light during writing period are accumulated between capacitor Ca 62 and capacitor Cc 64, and are withdrawn by a forward voltage versus diode D 61 to be applied during resetting period; the cycle is repeated. The revolving angle of liquid crystal is determined by a voltage applied between the both ends of capacitor Cc 64, and controls the intensity of light to be supplied as the output of video display system. Practically, for the white display the brightness increases along with the increasing absolute value of negative voltage to be applied to both ends of capacitor Cc 64, with the readout side as the basis. There is of course a saturating value in the voltage. For the black display, the darkness increses along with the increasing absolute value of positive voltage to be applied to both ends of capacitor Cc 64. Namely, higher the absolute value of voltage to capacitor Cc 64 the contrast increases.

The voltage on capacitor Cc 64 is influenced by equivalent resistances Ra 63, Rc 65 within spacial light modulator 1 and by such other elements than the equivalent resistances Ra 63, Rc 65; such other elements include for example the resistance values of ITO electrodes 102, 110, resistance value of connecting wire between spacial light modulator 1 and reset pulse generating circuit 2c, and resistance values of connectors. In FIG.8, the values of resistances caused by such elements other than the equivalent resistances Ra 63, Rc 65 within spacial light modulator 1 are collectively represented as a resistor R 66. The existence of resistor R 66 means that the voltage to be applied to liquid crystal layer 109 is influenced by not only the spreads in equivalent resistances Ra 63, Rc 65 but also resistor R 66; consequently the resetting voltage and the writing voltage to be applied to spacial light modulator 1 have to take the voltage reduction due to resistor R 66 into consideration. Therefore, in making compensation of the contrast, the voltage to be applied to liquid crystal layer 106 needs to be controlled considering the spreads in values of these equivalent resistances and the voltage reduction due to resistor R 66.

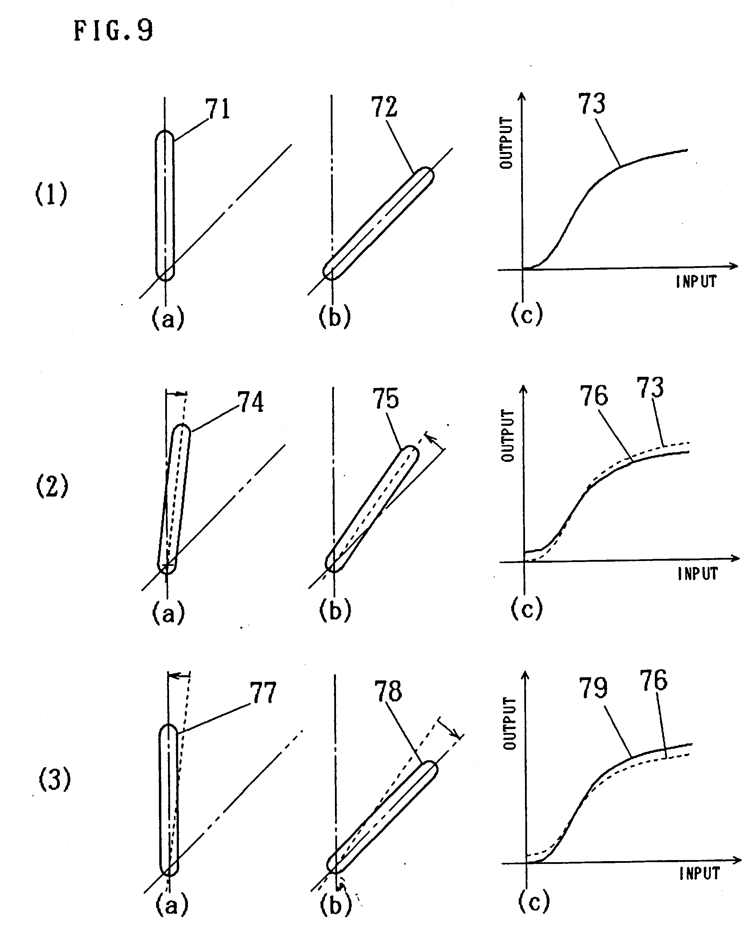

FIG.9 explains said principle of contrast compensation from the view point of revolution angle of liquid crystal. The description is based on an assumption that the material used in spacial light modulator 1 is a ferroelectric liquid crystal material. In the first place, a case where an appropriate voltage is applied to liquid crystal layer 109 is illustrated in FIG.9(1); in (a) of which numeral 71 represents a state of liquid crystal in black display, 72 in (b) represents a state of liquid crystal in white display. When, the revolving angle of liquid crystal reaches the largest, the γ curve takes a shape of curve 73 in (c). FIG.9(2) illustrates a situation where there is insufficient voltage applied to liquid crystal layer 109; in black display the liquid crystal is in a position 74 of (a) which is slightly revolved clockwise, while in white display the liquid crystal is revolved to a certain angle shown as 75 in (b), which angle is smaller than that at a normal white display 72. As the result, the black gets diluted and the white darkened. The γ curve at this situation is represented as curve 76 shown in (c) of FIG.9(2); there is some output of reflected light even there is no input of writing light, whereas even when the writing light is at its highest the output is lower is lower than γ curve 73 representing the normal situation, which means that it provides only a weak reflected light. In order to compensate the situation of diluted black as illustrated in (a) of FIG.9(2), the resetting voltage is raised and liquid crystal in black display revolves anti-clockwise to 77 in (a) of FIG.9(3) to resume normal black display. In order to compensate the situation of darkened white as illustrated in (b) of FIG.9(2), the writing voltage is lowered (larger absolute value) and liquid crystal in white display revolves clockwise to 78 in (b) of FIG.9(3) to resume normal white display. When, the γ curve is restored to the normal curve 73, as illustrated as curve 79 in (c) of FIG.9(3).

As described above, the black display and the white display may be compensated by raising the resetting voltage against the diluted black, and lowering the writing voltage against the darkened white. Therefore, by adjusting the resetting voltage and the writing voltage respectively, spreads in the characteristics of spacial light modulator 1 may be compensated, providing always an appropriate contrast and γ characteristic. The adjusting of resetting voltage and that of writing voltage are not necessarily be linked together.

For displaying a picture in full-color using the present system, three sets of spacial light modulator 1, writing video light generating apparatus 3, writing lens 4, beam splitter 5 and projection lens 7 are necessary, each corresponding to the three primary colors, R, G and B, respectively, plus a dichroic mirror for splitting a light from a light source 6 into the three primary colors, R, G and B. The functions as revealed in the present embodiment of course work out to produce the same effects also in a full-color display system.

Further, in such full-color display systems, the present invention not only compensates spreads in the characteristics of spacial light modulator but it also enables the white balancing of RGB making, it possible to produce with ease an appropriate color temperature of white. In addition, as the resetting voltage and the writing voltage each corresponding to the three RGB primary colors can be established independently, the present invention makes it possible to produce a video output of any desired color temperature by adjusting the balance of light emission among the three RGB primary colors.

## Claims

1. A video display device comprising:
a light writing type spacial light modulator;
a writing video light generating apparatus for generating a writing light scanning horizontally and vertically to write in said spacial light modulator; and
a vertical synchronous reset pulse generating circuit for generating a resetting pulse synchronized with vertical synchronous signal of said writing video light generating apparatus for withdrawing electric charges caused by incomming of said writing light to be accumulated in said spacial light modulator, which resetting pulse is to be applied between first and second electrodes of said spacial light modulator.

2. The video display device of claim 1 wherein said reset pulse generating circuit generates resetting pulse only once during one vertical blanking period.

3. The video display device of claim 1 further comprising:
a frequency/voltage converting circuit for converting frequency of said vertical synchronous signal into a voltage according to the frequency value; and
a reset pulse controlling circuit for modulating the width of said resetting pulse, a resetting voltage to be applied between two electrodes of said spacial light modulator during resetting period, or a writing voltage to be applied between two electrodes of said spacial light modulator during writing period in accordance with output of said frequency/voltage converting circuit.

4. A video display device comprising:
a light writing type spacial light modulator;
a writing video light generating apparatus for generating a writing light scanning horizontally and vertically to write in said spacial light modulator;
a reset pulse generating circuit for generating a resetting pulse for withdrawing electric charges caused by incomming of said writing light to be accumulated in said spacial light modulator, which resetting pulse is to be applied between first and second electrodes of said spacial light modulator; and
a reset pulse voltage adjusting circuit for varying a writing voltage to be applied between two electrodes of spacial light modulator during writing period and a resetting voltage to be applied between two electrodes of spacial light modulator during resetting period.

5. The video display device of claim 4 wherein said reset pulse voltage adjusting circuit comprises:
a voltage generator for generating a writing voltage to be applied between two electrodes of spacial light modulator during writing period and a resetting voltage to be applied between two electrodes of spacial light modulator during resetting period;
a voltage controller for controlling a voltage to be supplied from said voltage generator; and
a memory for memorizing said voltage value.
